# FASCICULE DE BREVET EUROPEEN

(11) **EP 0 919 409 B1**
(45) Date de publication et mention de la délivrance du brevet: **05.03.2003**
(21) Numéro de dépôt: 98122129.4
(22) Date de dépôt: 24.11.1998
(51) Int. Cl.: B60H 1/00, F28F 9/00

(54) **Dispositif de chauffage -ventilation avec accessoire optionnel pour véhicule automobile**
Heiz- und Lüftungsvorrichtung für Kraftfahrzeuge mit Zusatzbeschlag
Heating and ventilation device for a vehicle with additional fitting

(30) Priorité: 25.11.1997 FR 9714795
(43) Date de publication de la demande: 02.06.1999
(73) Titulaire: VALEO CLIMATISATION, 78321 La Verrière (FR)
(72) Inventeur: Loup, Didier, 78310 Maurepas (FR); Cointereau, Jean-Francois, 7200 Le Mans (FR)

(56) Documents cités:
- EP-A- 0 754 579
- US-A- 4 531 574
- US-A- 5 206 476
- US-A- 5 219 016

## Description

L'invention concerne un dispositif de chauffage-ventilation d'un habitacle de véhicule automobile.

Elle concerne plus particulièrement un dispositif du type comprenant un conduit de réchauffage d'air, ainsi qu'un échangeur de chaleur logé dans le conduit de réchauffage d'air et propre à être traversé par un flux d'air à réchauffer, et dans lequel l'échangeur de chaleur comporte un corps relié à deux boîtes collectrices.

On connaît déjà des dispositifs de ce type, dans lesquels l'échangeur de chaleur est du type liquide/air et est destiné à être parcouru par un liquide chaud, qui est habituellement le liquide de refroidissement du moteur.

Dans certains cas, le dispositif doit comporter en outre un accessoire fixé dans le conduit de réchauffage d'air, à côté de l'échangeur de chaleur, et propre à être traversé également par le même flux d'air. Cet accessoire constitue alors soit un équipement obligatoire, soit un équipement facultatif.

Cet accessoire peut être, par exemple, un radiateur électrique disposé adjacent à l'échangeur de chaleur. Ce radiateur électrique est alors prévu pour apporter un complément thermique lorsque l'énergie thermique fournie par l'échangeur de chaleur est insuffisante, comme c'est le cas notamment par temps froid et spécialement pendant la phase de démarrage du moteur.

Dans les dispositifs connus du type précité, l'échangeur de chaleur et l'accessoire sont fixés chacun individuellement à l'intérieur d'un boîtier délimitant le conduit de réchauffage d'air, ce qui nécessite des aménagements spéciaux du boîtier et requiert en outre des opérations supplémentaires lors de l'assemblage du dispositif.

De plus, lorsque l'accessoire doit constituer un équipement optionnel, il est généralement nécessaire de prévoir deux types de pièces selon que l'accessoire est ou non souhaité.

L'invention a notamment pour but de surmonter les inconvénients précités.

Elle vise en particulier à permettre la fixation optionnelle d'un accessoire à côté de l'échangeur de chaleur sans aménagements particuliers du boîtier et avec un minimum d'opérations.

Elle propose à cet effet un dispositif de chauffage-ventilation du type défini en introduction, dans lequel l'échangeur de chaleur comporte deux flasques solidaires respectivement des deux boîtes collectrices de l'échangeur de chaleur et propres à permettre la fixation d'un accessoire propre à être traversé par le flux d'air.

Il en résulte que l'accessoire peut être pré-assemblé à l'échangeur de chaleur pour constituer un ensemble qui peut être ensuite logé transversalement dans le conduit de réchauffage d'air.

Cela se traduit par une simplification de la structure du boîtier et des opérations de montage.

De plus, l'ensemble formé par l'échangeur de chaleur et l'accessoire est plus compact que les dispositifs connus.

En outre, un même échangeur de chaleur peut être utilisé avec ou sans l'accessoire en fonction de l'option souhaitée.

Etant donné que chacune des boîtes collectrices comprend habituellement une plaque collectrice coiffée par un couvercle, l'invention prévoit avantageusement que chacun des flasques prolonge latéralement une plaque collectrice.

Ainsi, les deux flasques résultent directement de la fabrication de l'échangeur de chaleur.

De façon avantageuse, ces deux flasques sont des plaques s'étendant dans des plans sensiblement parallèles.

Selon une autre caractéristique de l'invention, les deux flasques sont munis chacun d'au moins une ouverture propre à recevoir un plot de l'accessoire.

Avantageusement, les deux flasques sont munis chacun de deux ouvertures, tandis que l'accessoire comporte deux paires de plots prévues respectivement sur deux faces opposées.

Selon une caractéristique avantageuse de l'invention, les flasques sont déformables élastiquement pour permettre l'introduction des plots de l'accessoire dans les ouvertures des flasques.

Ainsi, la fixation de l'accessoire s'effectue de manière particulièrement simple sans nécessiter d'outillage particulier.

Les flasques sont de préférence réalisés d'une seule pièce avec les boîtes collectrices respectives.

Lorsque l'accessoire est muni d'un câble électrique d'alimentation, il est avantageux que l'un des deux flasques soit muni d'un passage pour la traversée du câble électrique.

Ce passage peut être obturé par un bouchon si l'accessoire n'est pas présent.

Dans une forme de réalisation de l'invention, le câble électrique comporte un connecteur propre à être raccordé électriquement à des broches électriques de l'accessoire, et ce connecteur possède une face conformée traversée par le câble électrique et propre à venir en appui étanche contre le pourtour du passage du flasque.

Dans une autre forme de réalisation, le câble électrique est raccordé directement à l'accessoire, et il est alors muni d'un passe-fil propre à venir en appui étanche contre le pourtour du passage du flasque.

Selon une autre caractéristique de l'invention, le conduit de réchauffage d'air est délimité par un boîtier comportant un logement transversal pour permettre l'introduction de l'échangeur de chaleur et de l'accessoire, préalablement assemblés, par un montage en tiroir.

En ce cas, le boîtier comporte avantageusement une paroi latérale munie d'un enfoncement propre à recevoir une des boîtes collectrices de l'échangeur de chaleur et une paroi latérale opposée munie d'une ouverture de passage pour le montage en tiroir, cette paroi latérale opposée étant munie d'au moins une patte de retenue propre à coopérer avec le flasque solidaire de l'autre boîte collectrice de l'échangeur de chaleur.

Ainsi, l'ensemble formé par l'échangeur de chaleur et l'accessoire peut être monté et maintenu facilement à l'intérieur du boîtier.

De façon préférentielle, l'accessoire est un radiateur électrique. En ce cas, ce dernier comporte de préférence au moins une résistance à coefficient de température positif.

Dans la description qui suit, faite à titre d'exemple, on se réfère aux dessins annexés, sur lesquels :
- la figure 1 est une vue partielle en coupe transversale d'un dispositif de chauffage-ventilation selon l'invention, dans lequel l'accessoire est un radiateur électrique ;
- la figure 2 est une vue de face d'un radiateur électrique propre à faire partie du dispositif de la figure 1 ;
- la figure 3 est une vue de dessus du radiateur électrique de la figure 2 ;
- la figure 4 est une vue en coupe transversale selon la ligne IV-IV de la figure 1 ;
- la figure 5 est une vue en coupe transversale selon la ligne V-V de la figure 1 ; et
- la figure 6 est une vue partielle analogue à celle de la figure 5 dans une autre forme de réalisation.

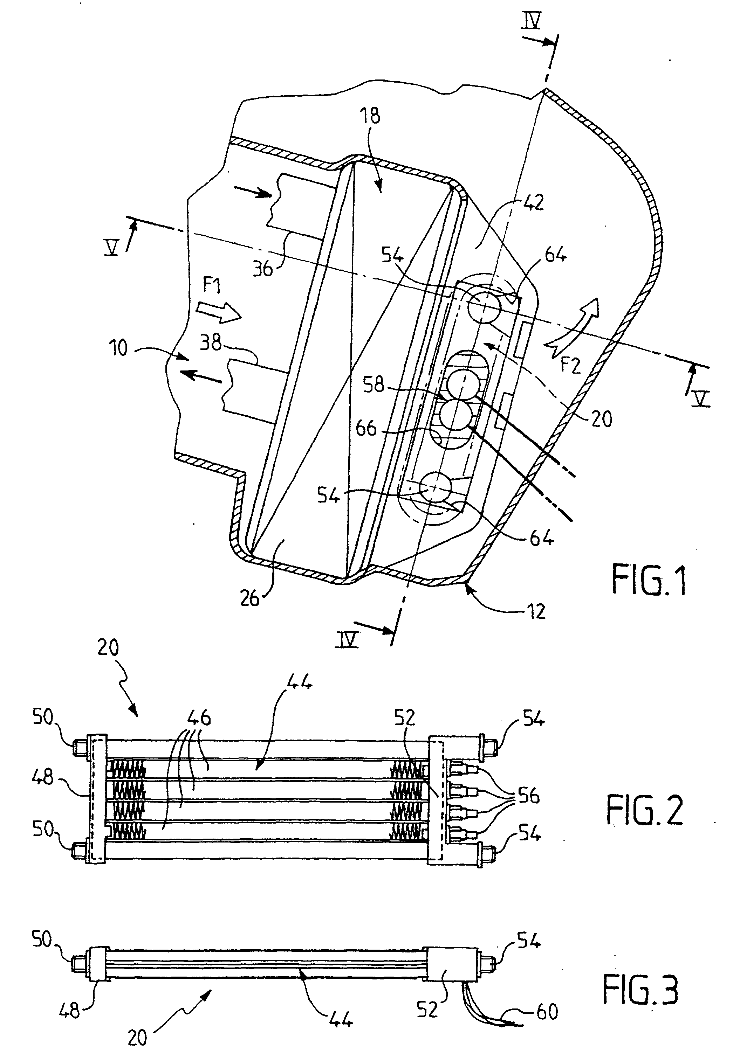

Le dispositif de chauffage-ventilation représenté sur les dessins annexés comprend un conduit de réchauffage 10 (figures 1, 4 et 5) délimité à l'intérieur d'un boîtier 12 comportant une paroi latérale 14 et une paroi latérale opposée 16.

A l'intérieur du conduit 10 sont logés un échangeur de chaleur 18 et un radiateur électrique 20 propres à être traversés, dans cet ordre, par un flux d'air froid F1 envoyé par un pulseur (non représenté) pour produire un flux d'air réchauffé F2.

Le radiateur électrique 20 peut comporter soit une ou plusieurs résistances électriques classiques dont la valeur résistive est pratiquement constante quelle que soit la température, soit de préférence une ou plusieurs résistances à coefficient de température positif (résistances CTP).

Les résistances CTP sont de plus en plus utilisées dans les dispositifs de chauffage de véhicule automobile du fait qu'elles permettent d'adapter la puissance électrique consommée à la puissance thermique désirée et qu'elles offrent en outre une grande sécurité de fonctionnement, évitant tout risque d'incendie.

Le flux d'air réchauffé F2 peut être mélangé en proportion variable avec un flux d'air froid pour produire un flux d'air mixé à température réglable. Ce flux est ensuite distribué dans l'habitacle d'un véhicule par des buses appropriées (non représentées) d'une manière en soi connue.

L'échangeur de chaleur 18 comprend un corps 22, typiquement un faisceau de tubes à ailettes, monté entre deux boîtes collectrices 24 et 26 situées respectivement du côté des parois latérales 14 et 16 du boîtier.

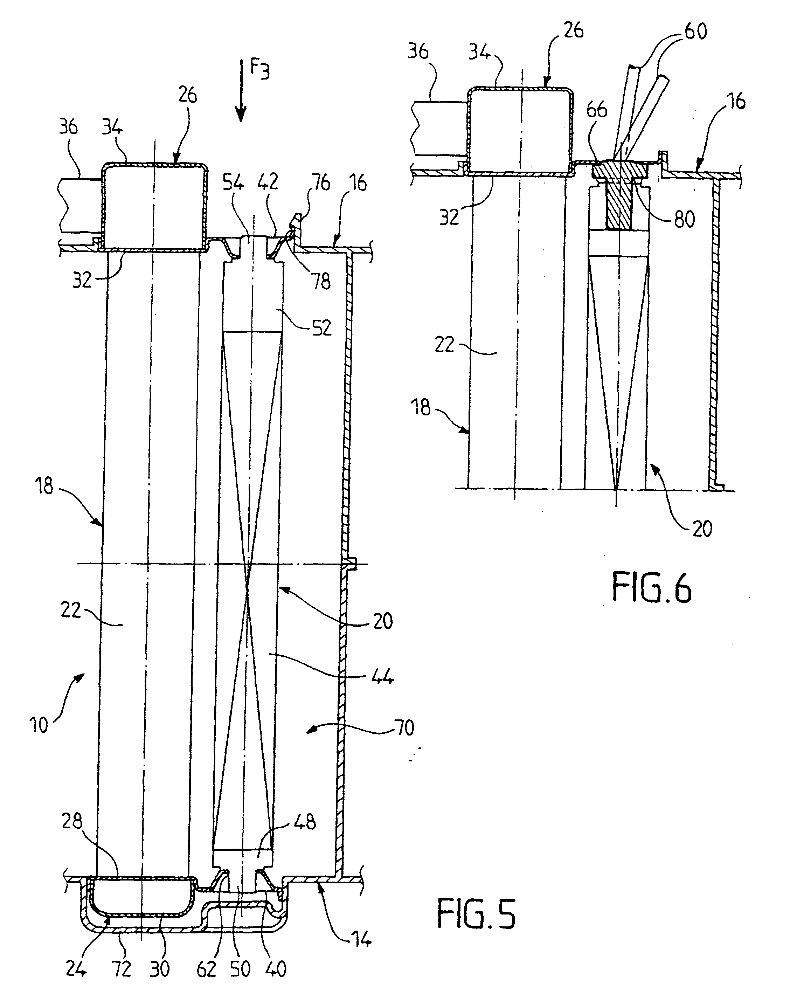

La boîte collectrice 24 comporte une plaque collectrice 28 (ou plaque à trous) coiffée par un couvercle 30, et la boîte collectrice 26 comporte une plaque collectrice 32 coiffée par un couvercle 34 (figure 5).

La boîte collectrice 24 est munie de deux tubulures 36 et 38 servant respectivement à l'admission et l'évacuation d'un fluide chaud, dans l'exemple le liquide de refroidissement du moteur du véhicule, qui parcourt le corps 22 de l'échangeur de chaleur pour réchauffer le flux d'air.

Dans l'exemple, le corps 22 et les boîtes collectrices 24 et 26 de l'échangeur de chaleur sont assemblés entre eux par brasage.

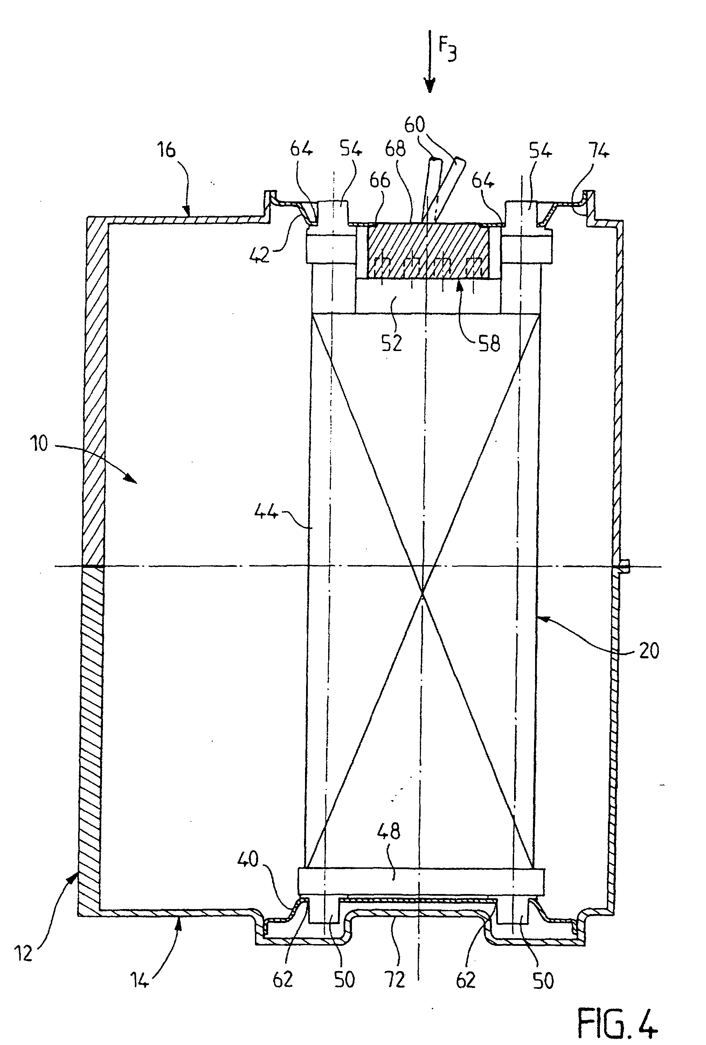

Comme on le voit plus particulièrement sur les figures 4 et 5, les plaques collectrices 28 et 32 sont munies de flasques respectifs 40 et 42 qui les prolongent latéralement et sont destinés à assurer la fixation du radiateur électrique 20.

Les flasques 40 et 42 sont des plaques de forme sensiblement trapézoïdale (figure 1) et s'étendent dans des plans sensiblement parallèles. La plaque collectrice 28 est réalisée d'une seule pièce avec le flasque 40, et il en est de même pour la plaque collectrice 32 et le flasque 42. L'ensemble plaque collectrice et flasque est réalisé avantageusement par emboutissage d'une tôle formée en une matière métallique, en particulier à base d'aluminium. Les boîtes collectrices 24 et 26 sont avantageusement réalisées dans cette même matière métallique.

Le radiateur électrique 20 comporte (figures 2 et 3) un corps 44 comportant quatre résistances électriques 46 du type à coefficient de température positif (CTP). Les résistances 46 sont montées à l'intérieur d'un cadre comprenant une face 48 munie de deux plots 50 et une face opposée 52 munie de deux plots 54.

La face 52 est munie de quatre broches électriques 56 destinées à permettre le raccordement d'un connecteur électrique 58 monté à l'extrémité d'un câble électrique 60 (figure 3).

Le flasque 40 (figures 4 et 5) est muni de deux ouvertures espacées 62 propres à recevoir les plots 50 du radiateur électrique, tandis que le flasque 42 est muni de deux ouvertures espacées 64 propres à recevoir les plots 54 du radiateur électrique. Les ouvertures 62 sont circulaires, tandis que les ouvertures 64 sont circulaires et pourvues chacune d'une embouchure latérale tronconique (figure 1) pour faciliter l'introduction des plots 54 lors du montage du radiateur électrique.

Les flasques 40 et 42 sont déformables élastiquement, ce qui permet de les écarter l'un de l'autre pour l'introduction des plots 50 et 54 dans les ouvertures correspondantes 62 et 64. Ensuite, les deux flasques reviennent élastiquement l'un vers l'autre pour assurer le maintien et la fixation du radiateur électrique.

Comme on le voit aux figures 1 et 4, le flasque 42 comporte en outre un passage 66 pour la traversée du câble électrique 60. Le connecteur 58 possède une face conformée 68 traversée par le câble électrique 60 et propre à venir en appui étanche contre le pourtour du passage 66. Il en résulte que le câble électrique traverse de façon étanche le flasque 42 par l'intermédiaire du connecteur 58 dont la forme est adaptée à celle du passage 66.

On peut ainsi réaliser un pré-assemblage de l'échangeur de chaleur 18 et du radiateur 20 et monter ensuite l'ensemble à l'intérieur du boîtier 12. Ce dernier définit un logement 70 qui s'étend transversalement entre les flasques 40 et 42 pour permettre le montage de l'ensemble échangeur-radiateur à la manière d'un tiroir dans la direction de la flèche F3 (figures 4 et 5).

La paroi latérale 14 comporte un enfoncement 72 (figures 4 et 5) de forme adaptée pour recevoir la boîte collectrice 24 et le flasque 40.

La paroi latérale 16 comporte une ouverture de passage 74 pour permettre le montage en tiroir de l'ensemble précité. De plus, la paroi 16 est munie d'au moins une patte de retenue 76 en forme de crochet (figure 5) propre à coopérer avec un rebord 78 du flasque 42 pour contribuer au maintien de l'ensemble échangeur-radiateur après son introduction dans le logement 70 par le montage en tiroir.

Dans la forme de réalisation représentée à la figure 6, le câble électrique 60 est raccordé directement au radiateur électrique 10, c'est-à-dire qu'il n'est pas nécessaire de prévoir des broches et un connecteur comme dans la forme de réalisation précédente. Le câble électrique 60 est muni d'un passe-fil 80 propre à prendre appui étanche contre le pourtour du passage 66 du flasque 42.

Le montage en tiroir peut être effectué dans les mêmes conditions avec l'échangeur de chaleur seul, c'est-à-dire sans accessoire (radiateur électrique, ou autre) fixé entre les flasques.

En ce cas, il est nécessaire d'obturer le passage 66 par un bouchon étanche pour éviter toute fuite d'air.

Bien entendu, l'invention n'est pas limitée aux formes de réalisation décrites précédemment à titre d'exemple et s'étend à d'autres variantes.

Ainsi, les flasques pourraient être réalisés d'une seule pièce avec les couvercles respectifs des boîtes collectrices, et non avec les plaques collectrices elles-mêmes.

De plus l'accessoire n'est pas limité à un radiateur électrique. Il peut s'agir de tout équipement susceptible d'être traversé par le flux d'air, par exemple un ventilateur, un filtre à air, un générateur de parfum, etc., disposé en amont ou en aval de l'échangeur de chaleur par rapport à l'écoulement du flux d'air.

Dans le cas où l'accessoire est un radiateur électrique, celui-ci peut comporter des résistances classiques à la place des résistances CTP.

## Revendications

1. Dispositif de chauffage d'un habitacle de véhicule automobile, du type comprenant un conduit de réchauffage d'air (10), ainsi qu'un échangeur de chaleur (18) logé dans le conduit et propre à être traversé par un flux d'air à réchauffer, et dans lequel l'échangeur de chaleur (18) comporte un corps (22) relié à deux boîtes collectrices (24, 26),
**caractérisé en ce que** l'échangeur de chaleur (18) comporte deux flasques (40, 42) solidaires respectivement des deux boîtes collectrices (24, 26) et propres à permettre la fixation d'un accessoire (20) propre à être traversé par le flux d'air.

2. Dispositif selon la revendication 1, dans lequel chacune des boîtes collectrices (24, 26) comprend une plaque collectrice (28, 32) coiffée par un couvercle (30, 34), **caractérisé en ce que** chacun des flasques (40, 42) prolonge latéralement une plaque collectrice (28, 32).

3. Dispositif selon l'une des revendications 1 et 2, **caractérisé en ce que** les deux flasques (40, 42) sont des plaques s'étendant dans des plans sensiblement parallèles.

4. Dispositif selon l'une des revendications 1 à 3, **caractérisé en ce que** les deux flasques (40, 42) sont munis chacun d'au moins une ouverture (62, 64) propre à recevoir un plot (50, 52) de l'accessoire (20).

5. Dispositif selon la revendication 4, **caractérisé en ce que** les deux flasques (40, 42) sont munis chacun de deux ouvertures (62, 64) et **en ce que** l'accessoire (20) comporte deux paires de plots (50, 54) prévues respectivement sur deux faces opposées (48, 52).

6. Dispositif selon l'une des revendications 4 et 5, **caractérisé en ce que** les flasques (40, 42) sont déformables élastiquement pour permettre l'introduction des plots (50, 54) de l'accessoire (20) dans les ouvertures (62, 64) des flasques.

7. Dispositif selon l'une des revendications 1 à 6, **caractérisé en ce que** les flasques (40, 42) sont réalisés d'une seule pièce avec les boîtes collectrices respectives.

8. Dispositif selon l'une des revendications 1 à 7, dans lequel l'accessoire (20) est muni d'un câble électrique d'alimentation (60), **caractérisé en ce que** l'un (42) des deux flasques est muni d'un passage (66) pour la traversée du câble électrique.

9. Dispositif selon la revendication 8, **caractérisé en ce que** le câble électrique (60) comporte un connecteur (58) propre à être raccordé électriquement à des broches électriques (56) de l'accessoire (20), et **en ce que** ce connecteur (60) possède une face conformée (68) traversée par le câble électrique et propre à venir en appui étanche contre le pourtour du passage (66) du flasque (42).

10. Dispositif selon la revendication 8, **caractérisé en ce que** le câble électrique (60) est raccordé directement à l'accessoire (20) et **en ce qu'**il est muni d'un passe-fil (80) propre à venir en appui étanche contre le pourtour du passage (66) du flasque (42).

11. Dispositif selon l'une des revendications 1 à 10, **caractérisé en ce que** le conduit de réchauffage de l'air (10) est délimité par un boîtier (12) comportant un logement transversal (70) pour permettre l'introduction de l'échangeur de chaleur (18) et de l'accessoire (20), préalablement assemblés, par un montage en tiroir.

12. Dispositif selon la revendication 11, **caractérisé en ce que** le boîtier (12) comporte une paroi latérale (14) munie d'un enfoncement (72) propre à recevoir une (24) des boîtes collectrices de l'échangeur de chaleur et une paroi latérale opposée (16) munie d'une ouverture de passage (74) pour le montage en tiroir, cette paroi latérale opposée étant munie d'au moins une patte de retenue (76) propre à coopérer avec le flasque (42) solidaire de l'autre boîte collectrice (26) de l'échangeur de chaleur.

13. Dispositif selon l'une des revendications 1 à 12, **caractérisé en ce que** l'accessoire est un radiateur électrique (20).

14. Dispositif selon la revendication 13, **caractérisé en ce que** le radiateur électrique (20) comporte au moins une résistance (46) à coefficient de température positif.

## Patentansprüche

1. Heizanlage für den Innenraum eines Kraftfahrzeuges vom Typ, umfassend einen Lufterwärmungskanal (10) sowie einen Wärmetauscher (18), der in dem Kanal aufgenommen ist und von einer zu erwärmenden Luftströmung durchquert werden kann; wobei der Wärmetauscher (18) einen Körper (22) umfasst, der mit zwei Sammlergehäusen (24, 26) verbunden ist, **dadurch gekennzeichnet, dass** der Wärmetauscher (18) zwei Flansche (40, 42) umfasst, jeweils verbunden mit den zwei Sammlergehäusen (24, 26) und geeignet, um die Befestigung eines Zubehörs ( 20) zu ermöglichen, welches von der Luftströmung bzw. dem Luftfluss durchquert werden kann.

2. Anlage nach Anspruch 1, bei welcher jedes der Sammlergehäuse (24, 26) eine von einem Deckel (30, 34) überdeckte Sammlerplatte (28, 32) umfasst, **dadurch gekennzeichnet, dass** jeder der Flansche (40, 42) lateralwärts eine Sammlerplatte (28,32) fortsetzt oder verlängert.

3. Anlage nach einem der Ansprüche 1 und 2, **dadurch gekennzeichnet, dass** die zwei Flansche (40, 42) Platten sind, die sich in im wesentlichen parallelen Ebenen erstrecken.

4. Anlage nach einem der Ansprüche 1 bis 3, **dadurch gekennzeichnet, dass** die zwei Flansche (40, 42) jeweils mit zumindest einer Öffnung (62, 64) versehen sind, geeignet zum Empfangen einer Steck- oder Kontaktstelle (50, 52) des Zubehörs oder Zubehörteiles (20).

5. Anlage nach Anspruch 4, **dadurch gekennzeichnet, dass** die zwei Flansche (40, 42) jeweils mit zwei Öffnungen (62, 64) versehen sind, und dass das Zubehör oder Zubehörteil (20) zwei Paare an Kontakt- oder Steckstellen (50, 54) umfasst, jeweils vorgesehen an zwei gegenüberstehenden Flächen (48,52).

6. Anlage nach einem der Ansprüche 4 und 5, **dadurch gekennzeichnet, dass** die Flansche (40, 42) elastisch verformbar sind, um die Einführung der Kontakt- oder Steckstellen (50, 54) des Zubehörs oder Zuberhörteils (20) in die Öffnungen (62, 64) der Flansche zu ermöglichen.

7. Anlage nach einem der Ansprüche 1 bis 6, **dadurch gekennzeichnet, dass** die Flansche (40, 42) aus lediglich einem Teil mit den jeweiligen Sammlergehäusen dargestellt sind.

8. Anlage nach einem der Ansprüche 1 bis 7, bei welcher das Zubehör oder Zubehörteil (20) mit einem elektrischen Versorgungskabel (60) versehen ist, **dadurch gekennzeichnet, dass** einer (42) der zwei Flansche mit einem Durchtritt (66) zum Durchtritt des elektrischen Kabels versehen ist.

9. Anlage nach Anspruch 8, **dadurch gekennzeichnet, dass** das elektrische Kabel (60) einen Verbinder oder Stecker (58) umfasst, geeignet, um elektrisch angeschlossen werden zu können an elektrische Klemmen oder Spangen (56) des Zubehörs bzw. Zubehörteils (20), und dass der Verbinder oder Stecker (60) eine angepasste Fläche (68) aufweist, die von dem elektrischen Kabel durchquert wird und geeignet ist, in dichtende Anlage zu gelangen gegen den Umriss des Durchtrittes (66) des Flansches (42).

10. Anlage nach Anspruch 8, **dadurch gekennzeichnet, dass** das elektrische Kabel (60) unmittelbar an das Zubehör oder Zubehörteil (20) angeschlossen ist, und dass eine Kabelfiihrung (80) vorgesehen ist, geeignet, um in dichtende Anlage gegen den Umriss des Durchtrittes (66) des Flansches (42) zu gelangen.

11. Anlage nach einem der Ansprüche 1 bis 10, **dadurch gekennzeichnet, dass** der Lufterwärmungskanal (10) von einem Gehäuse (12) begrenzt ist, umfassend eine transversale Aufnahme (70), um die Einführung des Wärmetauschers (18) und des Zubehörs oder Zubehörsteiles (20), vorangehend zusammengebaut oder montiert mittels einer Schubladen ähnlichen Montage, zu ermöglichen.

12. Anlage nach Anspruch 11, **dadurch gekennzeichnet, dass** das Gehäuse (12) eine Lateralwandung (14) umfasst, bereitgestellt mit einem Rücksprung (72), geeignet zum Aufnehmen eines (24) der Sammlergehäuse des Wärmetauschers, sowie eine gegenüberstehende Lateralwandung (16), bereitgestellt mit einer Durchtrittsöfmung (74) für die schubladenartige Montage, wobei diese gegenüberstehende Lateralwandung mit zumindest einer Rückhaltelasche (76) versehen ist, geeignet zur Wechselwirkung mit dem Flansch (42), der mit dem anderen Sammlergehäuse (26) des Wärmetauschers verbunden ist.

13. Anlage nach einem der Ansprüche 1-12, **dadurch gekennzeichnet, dass** das Zubehör oder Zubehörteil ein elektrischer Heizkörper bzw. ein Elektroheizer (20) ist.

14. Anlage nach Anspruch 13, **dadurch gekennzeichnet, dass** der elektrische Heizkörper (20) zumindest einen Widerstand (46) mit positivem Temperaturkoeffizienten umfasst.

## Claims

1. Heating apparatus for a motor vehicle cabin, of the type including an air heating duct (10), together with a heat exchanger (18) mounted in the duct and arranged for a stream of air, which is to be heated, to pass through it, and wherein the heat exchanger (18) comprises a body (22) connected to two headers (24, 26),
**characterised in that** the heat exchanger (18) includes two plate members (40, 42), each fixed to a respective one of the two headers (24, 26) and adapted for the fastening of an accessory (20) which is arranged for the air stream to pass through it.

2. Apparatus according to Claim 1, in which each of the headers (24, 26) comprises a header plate (28, 32) overlaid by a cover (30, 34), **characterised in that** each of the plate members (40, 42) extends one header plate (28, 32) sideways.

3. Apparatus according to Claim 1 or Claim 2, **characterised in that** the two plate members (40, 42) are plates lying in substantially parallel planes.

4. Apparatus according to one of Claims 1 to 3, **characterised in that** each of the two plate members (40, 42) is formed with at least one aperture (62, 64) for receiving a spigot (50, 54) of the accessory (20).

5. Apparatus according to Claim 4, **characterised in that** each of the two plate members (40, 42) is formed with two apertures (62, 64), and **in that** the accessory (20) has two pairs of spigots (50, 54) arranged respectively on two opposed faces (48, 52).

6. Apparatus according to Claim 4 or Claim 5, **characterised in that** the plate members (40, 42) are elastically deformable to enable the spigots (50, 54) of the accessory (20) to be introduced into the apertures (62, 64) in the plate members.

7. Apparatus according to one of Claims 1 to 6, **characterised in that** the plate members (40, 42) are made in one piece with the respective headers.

8. Apparatus according to one of Claims 1 to 7, in which the accessory (20) has an electric power supply cable (60), **characterised in that** one of the two plate members (42) is formed with a passage (66) for the electric cable to pass through.

9. Apparatus according to Claim 8, **characterised in that** the electric cable (60) includes a connector (58) which is arranged to be connected electrically to electrical terminals (56) of the accessory (20), and **in that** the connector (60) has a configured face (68) through which the electric cable passes and which is arranged to engage sealingly against the perimeter of the passage (66) in the plate member (42).

10. Apparatus according to Claim 8, **characterised in that** the electric cable (60) is connected directly to the accessory (20), and **in that** it is fitted with a grommet (80) which is arranged to engage sealingly against the perimeter of the passage (66) in the plate member (42).

11. Apparatus according to one of Claims 1 to 10, **characterised in that** the air heating duct (10) is defined by a casing (12) which includes a transverse housing (70) to enable the heat exchanger (18) and accessory (20), assembled together beforehand, to be introduced into it in the manner of a drawer,

12. Apparatus according to Claim, 11, **characterised in that** the casing (12) has a side wall (14) which is formed with a pocket (72) for receiving one of the headers (24) of the heat exchanger, and an opposite side wall (16) which is formed with a passage opening (74) for the drawer-like assembly operation, the said opposite side wall being formed with at least one retaining lug (76) for co-operating with the plate member (42) that is fixed with respect to the other header (26) of the heat exchanger.

13. Apparatus according to one of Claims 1 to 12, **characterised in that** the accessory is an electric radiator (20).

14. Apparatus according to Claim 13, **characterised in that** the electric radiator (20) includes at least one resistor having a positive temperature coefficient.
